# EUROPEAN PATENT SPECIFICATION

(11) **EP 1 369 296 B1**
(45) Date of publication and mention of the grant of the patent: **19.07.2006**
(21) Application number: 03076631.5
(22) Date of filing: 28.05.2003
(51) Int. Cl.: B60N 2/28

(54) **Infant seat**
Kindersitz
Siège d'enfants

(30) Priority: 05.06.2002 NL 1020767
(43) Date of publication of application: 10.12.2003
(73) Proprietor: Maxi Miliaan B.V., 5705 DG Helmond (NL)
(72) Inventor: Siewertsen, Adriaan, 5691 MD Son en Breugel (NL)
(74) Representative: Veldman-Dijkers, Cornelia G. C.

(56) References cited:
- EP-A- 0 431 199
- EP-A- 0 921 030
- EP-A- 1 077 152

## Description

The invention relates to an infant seat for use in a vehicle, comprising a frame to be positioned on a vehicle seat, a seating shell connected to the frame, and belt guide means present between said frame and said seating shell, which infant seat furthermore comprises a belt tensioning mechanism which is movable from a first position, in which a seat belt connected to the vehicle can freely move through the belt guide means, to a second position, in which the seat belt is tensioned with respect to the belt guide means by means of the belt tensioning mechanism, and vice versa.

With an infant seat of this type, as is known from European patent application EP-A2-1 077 152, the seating shell is pivotally connected to the frame. The frame comprises belt guide means for guiding a seat belt connected to the vehicle. The frame furthermore comprises a belt tensioning mechanism comprising arms which pivot about pivot pins. The seating shell is pivoted away from the frame when the seat belt is being passed through the belt guide means. Once the seat belt has been passed through the belt guide means, the seating shell is pivoted back from the pivoted position to the position of use, as a result of which pivoting movement the arms of the belt tensioning means are tilted downwards, causing the seat belt to be tensioned.

One drawback of this known infant seat is the fact that it is not possible to tension the seat belt any further or to disconnect the seat belt from the infant seat after an infant has been placed in the infant seat, unless the infant and the seating shell together are pivoted relatively far forwards.

The object of the invention is to provide an infant seat in which tensioning of the seat belt can take place in a simple manner.

This objective is accomplished with the infant seat according to the invention in that the belt + tensioning mechanism comprises a slide disposed between the frame and the seating shell, which slide can be translated in a direction of translation between said first position and said second position.

The tensioning of a seat belt can take place in a simple manner by means of a translatable slide. It is also possible to move the slide, which may be positioned under or behind the seating shell, for example, after an infant has been placed in the infant seat, without the infant being moved thereby.

One embodiment of the infant seat according to the invention is characterized in that the slide comprises fins extending transversely to the direction of translation, whilst the belt guide means are provided with a belt support positioned between the fins in the aforesaid second position.

The fins, which can be moved around the belt support, effect a desired extension of the seat belt around a belt guide support in a simple manner.

Another embodiment of the infant seat according to the invention is characterized in that the belt tensioning mechanism comprises a cam which pivots about pivot pin, which pivoting movement can be effected by means of a lever, causing the slide to move from the first position to the second position.

Pivoting of a cam and movement of the slide can be effected in a simple manner by means of the lever, which may extend up to a front side of the seating shell remote from the frame, for example.

Yet another embodiment of the infant seat according to the invention is characterized in that the belt tensioning mechanism comprises a spring, by means of which the slide can be moved from said second position to said first position.

Movement of the slide to the first, belt-releasing position can be effected in a simple manner by means of a spring.

The invention will be explained in moredetail hereinafter with reference to the drawings, in which:
Figure 1 is a perspective view of an infant seat according to the invention;
Figure 2 is a perspective view of a part of a frame of the infant seat that is shown in Figure 1, showing a seat belt present therein;
Figure 3 shows a slide of a belt tensioning mechanism of the infant seat that is shown in Figure 2;
Figures 4A and 4B are a side elevation and a bottom plan view, respectively, of the belt tensioning mechanism according to the invention of the infant seat that is shown in Figure 1, showing the belt tensioning mechanism in a first position thereof;
Figures 5A and 5B are a side elevation and a bottom plan view, respectively, of the belt tensioning mechanism according to the invention of the infant seat that is shown in Figure 1, showing the belt tensioning mechanism in the second position thereof; and
Figures 6 and 7 show a part of a seat belt in the first position and the second position, respectively, of the belt tensioning mechanism.

Like parts are indicated by the same numerals in the various Figures.

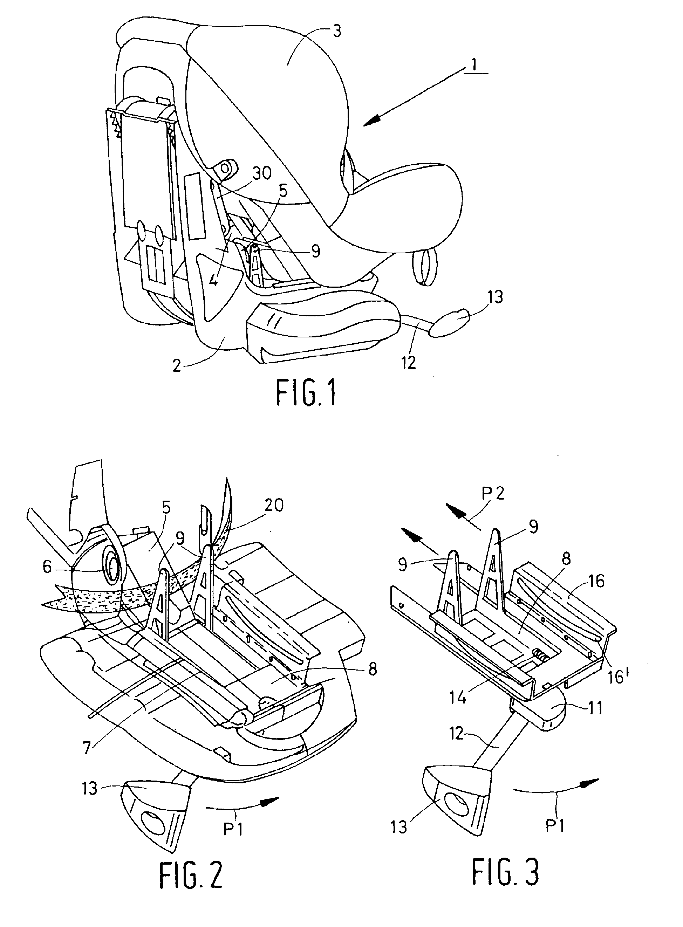

Figure 1 shows an infant seat 1 which is suitable for use in a vehicle. The infant seat 1 comprises a frame 2 and a seating shell 3 supported by the frame 2. Present between the frame 2 and the seating shell 3 is an opening 4, through which a seat belt connected to the vehicle can extend. After the seat belt has been passed through the opening 4, said seat belt is connected to a belt buckle catch in the vehicle in a usual manner.

The infant seat as described so far is known per se, and consequently it will not be explained in more detail herein.

The frame 2 of the infant seat 1 according to the invention comprises a belt support 5 and two belt guiding elements 6 disposed on either side of the belt support 5, which together form the belt guide means. Only the left-hand belt guiding element 6 of the two belt guiding elements 6 is shown in Figure 2.

The frame 2 furthermore comprises a belt tensioning mechanism comprising a slide 8 which is movably accommodated in a baseplate 7. The slide 8 is provided with two fins 9 extending on either side of the belt support 5. The baseplate 7 is provided with a cam 11 which pivots about a pivot pin 10. The cam 11 is connected to an operating element 13 via a lever 12. The slide 8 is provided, on a side remote from the fins 9, with a plate 15 which abuts against the cam 11 under the influence of the spring force of a spring 14.

The frame 2 is provided with circular slots 16' formed in vertical plates 16, in which pins connected to the seating shell 3 are slidably accommodated. The circular slots 16 make it possible to place the seating shell 3 in a desired tilted position with respect to the frame 2, so that the infant will take up a more upright or a less upright position, as desired.

The placing and securing of the infant seat 1 according to the invention by means of a seat belt 20 present in a vehicle will now be explained in more detail.

As is known per se, the infant seat 1 is positioned on the vehicle seat, after which the seat belt 20 is passed through the opening 4 present between the seating shell 3 and the frame 2, and subsequently connected to a belt buckle catch. Then the seat belt is connected to the infant seat 1 by means of a belt clamp 30 (Figure 1) which is known per se.

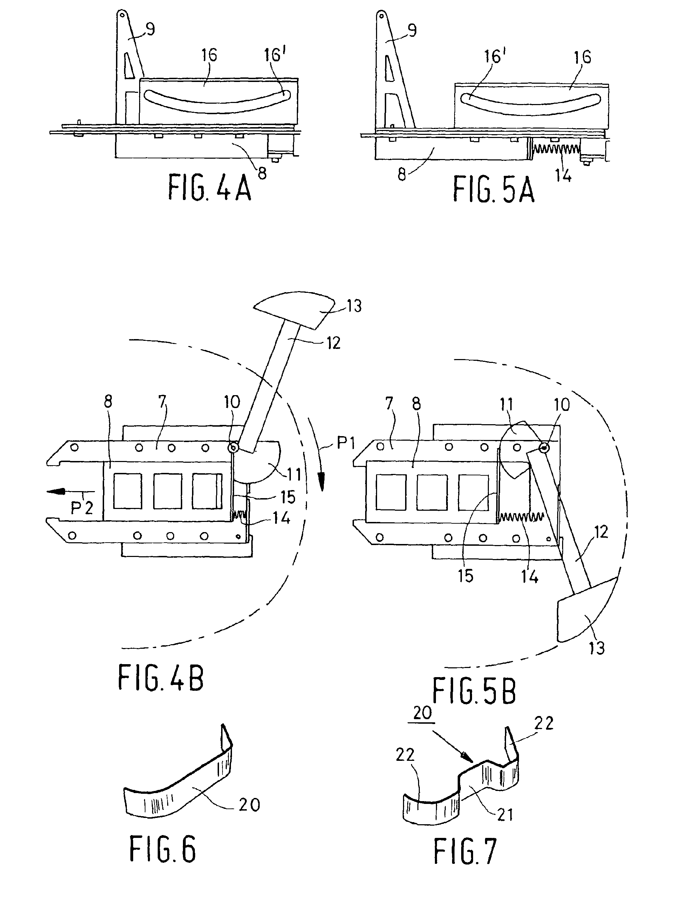

When the seat belt 20 is being passed through the opening 4, the seat belt 20 will be positioned between the fins 9 on the one hand and the belt support 5 and the belt guiding elements 6 on the other hand, as is shown in Figure 2. In that position, the belt 20 extends around the belt support 5 and the belt guiding elements 6 in the manner that is shown in Figure 6.

Once the seat belt 20 has been connected to the belt buckle catch, the operating element 13 is pivoted in the direction indicated by the arrow P1, as a result of which the lever 12 connected to the operating element 13 and the cam 11 connected to said lever are pivoted about the pivot pin 10. Said pivoting movement of the cam 11 causes the slide 8 to be moved in the direction of translation indicated by the arrow P2 against the spring force of the spring 14, until the slide 8 has been moved from the first position as shown in Figures 4A, 4B to the second position as shown in Figures 5A, 5B. During said movement of the slide 8, the fins 9 are moved along the belt support 5 on either side thereof, during which movement the fins 9 arrange the belt 20 abutting against the belt support 5 around the belt guiding elements 6 and the belt support 5, causing the belt 20 to extend in a way that is shown in Figure 7. In this position, the central part 21 abuts against the belt support 5, whilst the parts 22 present on either side thereof extend around the belt guiding elements 6, causing the seat belt 20 to be firmly tensioned.

The tensioning of the seat belt 20 can take place either before or after an infant has been placed in the infant seat 1, as desired. The advantage of tensioning the seat belt after an infant has been placed in the infant seat 1 is that the infant's weight causes the infant seat 1 to be pressed down on the vehicle seat to a slight degree already, so that an even better tensioning result is obtained.

When the seat belt 20 is to be disconnected from the infant seat 1, the operating element 13 is pivoted in the opposite direction of the arrow P1, with the spring force of the spring 14 causing the slide 8 to be translated in the opposite direction of the arrow P2 to the first position as shown in Figures 4A, 4B.

It is also possible to move the slide by means of a screwed spindle mechanism, a ratchet mechanism, etc.

Instead of using the belt support 5, it is also possible to provide the fins 9 with belt guides, in which case the way in which the belt extends through said guides is only defined by the belt guiding elements 6 and the fins 9.

According to another possibility, the operating element 13 is provided on one of the sides or at the rear of the infant seat 1, with a cam-shaped element being pivotable about a horizontally extending pivot.

## Claims

1. An infant seat (1) for use in a vehicle, comprising a frame (2) to be positioned on a vehicle seat, a seating shell (3) connected to the frame (2), and belt guide means present between said frame and said seating shell, which infant seat furthermore comprises a belt tensioning mechanism which is movable from a first position, in which a seat belt connected to the vehicle can freely move through the belt guide means, to a second position, in which the seat belt is tensioned with respect to the belt guide means by means of the belt tensioning mechanism, and vice versa, **characterized in that** the belt tensioning mechanism comprises a slide (8) disposed between the frame (2) and the seating shell, which slide can be translated in a direction of translation between said first position and said second position.

2. An infant seat (1) according to claim 1, **characterized in that** the slide (8) comprises fins (9) extending transversely to the direction of translation, whilst the belt guide means are provided with a belt support (5) positioned between the fins in the aforesaid second position.

3. An infant seat (1) according to claim 1, **characterized in that** the belt tensioning mechanism comprises a cam (11) which pivots about pivot pin, which pivoting movement can be effected by means of a lever (12), causing the slide to move from the first position to the second position.

4. An infant seat (1) according to any one of the preceding claims, **characterized in that** the belt tensioning mechanism comprises a spring (14), by means of which the slide (8) can be moved from said second position to said first position.

## Patentansprüche

1. Kindersitz (1) für den Einsatz in einem Fahrzeug, mit einem Rahmen (2) zum Anordnen auf einem Fahrzeugsitz, einer mit dem Rahmen (2) verbundenen Sitzschale (3) und mit Gurtführungsmitteln zwischen dem Rahmen und der Sitzschale, wobei der Kindersitz darüber hinaus einen Gurtspannmechanismus umfasst, der von einer ersten Position, in der sich ein mit dem Fahrzeug verbundener Sicherheitsgurt frei durch die Gurtführungsmittel bewegen kann, zu einer zweiten Position verstellbar ist, in der der Sicherheitsgurt gegenüber den Gurtführungsmitteln durch den Gurtspannmechanismus gespannt ist, und umgekehrt, **dadurch gekennzeichnet, dass** der Gurtspannmechanismus einen zwischen dem Rahmen (2) und der Sitzschale angeordneten Schieber (8) umfasst, wobei der Schieber in eine Translationsrichtung zwischen der ersten Position und der zweiten Position verschoben werden kann.

2. Kindersitz (1) nach Anspruch 1, **dadurch gekennzeichnet, dass** der Schieber (8) sich transversal zur Translationsrichtung erstreckende Rippen (9) umfasst, während die Gurtführungsmittel mit einer zwischen den Rippen in der vorgenannten zweiten Position angeordneten Gurtstütze (5) ausgerüstet sind.

3. Kindersitz (1) nach Anspruch 1, **dadurch gekennzeichnet, dass** der Gurtspannmechanismus eine sich um einen Drehzapfen drehende Nocke (11) umfasst, wobei die Drehbewegung anhand eines Hebels (12) herbeigeführt werden kann, was den Schieber dazu veranlasst, sich von der ersten Position zur zweiten Position zu bewegen.

4. Kindersitz (1) nach einem der vorhergehenden Ansprüche, **dadurch gekennzeichnet, dass** der Gurtspannmechanismus eine Feder (14) umfasst, durch die der Schieber (8) von der zweiten Position in die erste Position bewegt werden kann.

## Revendications

1. Siège pour enfant (1) pour utilisation dans un véhicule, comportant un cadre (2) devant être positionné sur un siège de véhicule, une coque de siège (3) reliée au cadre (2), et des moyens de guidage de ceinture présents entre ledit cadre et ladite coque de siège, lequel siège pour enfant comporte en outre un mécanisme de tension de ceinture qui est mobile depuis une première position, dans laquelle une ceinture de sécurité reliée au véhicule peut être déplacée librement à travers les moyens de guidage de ceinture, jusqu'à une deuxième position, dans laquelle la ceinture de sécurité est tendue par rapport aux moyens de guidage de ceinture à l'aide du mécanisme de tension de ceinture, et vice-versa, **caractérisé en ce que** le mécanisme de tension de ceinture comporte une glissière (8) disposée entre le cadre (2) et la coque de siège, laquelle glissière peut être translatée dans une direction de translation entre ladite première position et ladite deuxième position.

2. Siège pour enfant (1) selon la revendication 1, **caractérisé en ce que** la glissière (8) comprend des ailettes (9) qui s'étendent transversalement à la direction de translation, alors que les moyens de guidage de ceinture sont pourvus d'un support de ceinture (5) positionné entre les ailettes dans ladite deuxième position.

3. Siège pour enfant (1) selon la revendication 1, **caractérisé en ce que** le mécanisme de tension de ceinture comprend une came (11) qui pivote autour d'un axe de pivotement, lequel mouvement de pivotement peut être effectué au moyen d'un levier (12), qui amène la glissière à se déplacer depuis la première position jusqu'à la deuxième position.

4. Siège pour enfant (1) selon l'une quelconque des revendications précédentes, **caractérisé en ce que** le mécanisme de tension de ceinture comprend un ressort (14), au moyen duquel la glissière (8) peut être déplacée depuis ladite deuxième position jusqu'à ladite première position.
